# EUROPEAN PATENT APPLICATION

(11) **EP 4 542 955 A1**
(43) Date of publication of application: **23.04.2025**
(21) Application number: 23845091.0
(22) Date of filing: 06.06.2023
(51) Int. Cl.: H04L 45/00, H04L 12/00, H04L 41/0213

(54) **METHOD FOR SENDING LOAD INFORMATION, METHOD FOR SENDING MESSAGE, AND APPARATUS**

(30) Priority: 29.07.2022 CN 202210915313; 08.03.2023 CN 202310254859
(71) Applicant: Huawei Technologies Co., Ltd., Shenzhen, Guangdong 518129 (CN)
(72) Inventor: WEN, Xuemin, Shenzhen, Guangdong 518129 (CN); LIN, Weihong, Shenzhen, Guangdong 518129 (CN); XIONG, Liudong, Shenzhen, Guangdong 518129 (CN); HAN, Zhaojiao, Shenzhen, Guangdong 518129 (CN)
(74) Representative: Huawei European IPR
(86) International application number: PCT/CN2023/098565
(87) International publication number: WO 2024/021878

(57) **Abstract**

This application provides a load information sending method and apparatus, and a packet sending method and apparatus, to find a most appropriate transmission path for packet transmission, and improve packet transmission performance. The load information sending method is applied to a first network device in a first device cluster, and the method includes: The first network device obtains traffic information of the first network device. The first network device determines load information of the first network device based on the traffic information of the first network device. The first network device sends the load information of the first network device to a second network device, where the second network device belongs to a second network device cluster, the load information of the first network device is used for determining load information of a path including a first subpath, and the first subpath is a path from the second network device to the first network device.

## Description

This application claims priority to Chinese Patent Application No. 202210915313.4, filed with the China National Intellectual Property Administration on July 29, 2022 and entitled "LOAD INFORMATION SENDING METHOD AND APPARATUS, AND PACKET SENDING METHOD AND APPARATUS", and to Chinese Patent Application No. 202310254859.4, filed with the China National Intellectual Property Administration on March 8, 2023 and entitled "LOAD INFORMATION SENDING METHOD AND APPARATUS, AND PACKET SENDING METHOD AND APPARATUS", which are incorporated herein by reference in their entireties.

### TECHNICAL FIELD

This application relates to the field of computer technologies, and in particular, to a load information sending method and apparatus, and a packet sending method and apparatus.

### BACKGROUND

With expansion of a network scale, a plurality of network devices may be grouped into one device cluster. To increase a transmission speed of a cross-device cluster packet, one or more paths may be established between different device clusters. For example, it is assumed that a direct path is established between any two device clusters in a network architecture, a packet sent from a device cluster A to a device cluster B may be transmitted through a direct path between the device cluster A and the device cluster B. In this way, the packet is not forwarded by a network device in another device cluster. This increases a transmission rate of the packet.

However, if congestion occurs on a network interface that is on a network device and that is connected to a network device in another device cluster, network congestion may occur on a direct path corresponding to the network interface. If the direct path is used for packet transmission, packet transmission performance may be affected. Therefore, to ensure that the packet transmission performance is not affected, the network device may select one transmission path from a plurality of transmission paths as a target path with reference to congestion statuses of a plurality of local network interfaces, to transmit the packet through the target path.

In the foregoing method, the target path is selected based on a congestion status of a local network interface being a congestion status of an entire transmission path. An actual congestion status of the transmission path cannot be determined, and therefore, a most appropriate target path cannot be found, and the packet transmission performance cannot be ensured.

### SUMMARY

This application provides a load information sending method and apparatus, and a packet sending method and apparatus, to find a most appropriate transmission path for packet transmission, and improve packet transmission performance.

According to a first aspect, this application provides a load information sending method. The method may be applied to a first network device in a first device cluster. When performing the load information sending method provided in this application, the first network device may first obtain traffic information of the first network device. Then, the first network device may determine load information of the first network device based on local traffic information. Then, the first network device sends the load information of the first network device to a second network device in a second device cluster. The load information of the first network device indicates a capability of the first network device to receive and forward a packet, and is used for determining load information of a path including a first subpath. The first subpath is a path from the second network device to the first network device. To be specific, if the second network device needs to determine load information of a path, and the path includes a part from the second network device to the first network device, the second network device may calculate the load information of the path based on the load information of the first network device. In this way, a network device performs routing based on load information of another network device, instead of performing routing based only on a congestion status of a local network interface. In this way, a congestion status of a network device on a path is considered, so that information referenced by the network device during routing can more comprehensively reflect a congestion status of an entire transmission path, to find a most appropriate transmission path for packet transmission, and improve packet transmission performance. In addition, in this embodiment of this application, each network device connected to a network device in another device cluster may calculate load information of the network device. In this way, a granularity of the load information of the network device is refined, and routing accuracy is improved.

In some possible implementations, the load information of the first network device may include first load information and/or second load information. The first load information is used for determining load information of a first path, the first path is a shortest path from the second network device to the first network device, and the first load information indicates a capability of the first network device to receive and forward a packet to a device in the first packet cluster. The second load information is used for determining load information of a second path, the second path is a path from the second network device to a third network device through the first network device, the second load information indicates a capability of the first network device to receive and forward a packet to a network device in a third device cluster, and the third network device belongs to the third device cluster. In other words, for a shortest path and a non-shortest path that pass through a same network device, load information of the shortest path and load information of the non-shortest path may be calculated based on different load information. In this way, different types of paths are evaluated by using different types of load information. This improves accuracy of calculating load information of the path, and improves routing accuracy.

In some possible implementations, the first load information is obtained through calculation based on downlink traffic information of the first network device. The downlink traffic information of the first network device is related information of traffic sent by the first network device to another device in the first device cluster. The downlink traffic information of the first network device indicates information about traffic sent by the first network device to another device in the first device cluster. Therefore, higher downlink traffic of the first network device indicates a poorer capability the first network device can provide to forward traffic to another device in the first device cluster. It can be learned that, based on the downlink traffic information of the first network device, whether a large quantity of packets are being sent by the first network device to another device in the first network device cluster may be determined, to determine a capability the first network device can provide to send a packet to another device in the first device cluster.

In some possible implementations, the first load information is determined based on a ratio of the downlink traffic of the first network device to downlink bandwidth of the first network device.

In some possible implementations, the second load information is obtained through calculation based on uplink traffic information of the first network device. The uplink traffic information of the first network device indicates information about traffic received by the first network device from another device in the first device cluster. The uplink traffic received by the first network device needs to be forwarded by the first network device to another network device. Therefore, higher uplink traffic of the first network device indicates a poorer capability the first network device can provide to forward a packet to another device cluster. It can be learned that, based on the uplink traffic information of the first network device, whether a large quantity of packets are being sent by the first network device to another device may be determined, to determine a capability the first network device can provide to send a packet to a device in another device cluster.

In some possible implementations, the first load information is determined based on a ratio of the uplink traffic of the first network device to uplink bandwidth of the first network device.

In some possible implementations, the load information of the first network device may be carried in a payload (payload) part of a packet. Specifically, when notifying the second network device of the first load information of the first network device, the first network device may send a first packet to the second network device, and include the load information of the first network device in a payload part of the first packet. Optionally, if the load information of the first network device includes the first load information and the second load information, the first load information and the second load information may be carried in a same packet. For example, the first load information and the second load information are carried in the payload part of the first packet. Alternatively, the first load information and the second load information may be carried in different packets. For example, the first load information may be carried in the payload part of the first packet, and the second load information is carried in a payload part of a second packet. Similar to the first packet, the second packet is another packet also sent by the first network device to the second device.

In some possible implementations, the first packet further includes first indication information, and the first indication information indicates that the payload part of the first packet includes the load information of the first network device.

In some possible implementations, the first indication information is carried in a control protocol packet header of the first packet.

In some possible implementations, the control protocol packet header includes a neighbor notification protocol (Neighbor Notification Protocol, NNP) packet header, and the first indication information is carried in a subtype (subtype) field of the NNP packet header.

In some possible implementations, the first packet further includes a link-layer (Link-Layer) packet header, the link-layer packet header includes second indication information, and the second indication information indicates that the first packet includes the control protocol packet header.

In some possible implementations, the second indication information is carried in a protocol (Protocol) field of the link-layer packet header.

In some possible implementations, the first network device may further receive load information sent by another network device. To be specific, the first network device may receive third load information sent by a fourth network device in a fourth device cluster, where the third load information is determined based on traffic information of the fourth network device. In this way, when a packet that can be transmitted through a subpath between the first network device and the fourth network device can be received, the first network device may determine load information of the path based on the third load information.

According to a second aspect, this application provides a packet sending method. The method may be applied to a first network device in a first device cluster. When performing the packet sending method provided in this application, the first network device first obtains a target packet to be sent to a destination device. The destination device belongs to a second device cluster. Then, the first network device may plan a first path and a second path based on a network topology, and determine a target path from the first path and the second path based on load information of a second network device and load information of a third network device. Finally, the first network device sends the target packet to the destination device through the target path. The first path is a path from the first network device to the destination device, and the first path passes through the second network device in the second device cluster. The second path is a shortest path from the first network device to the destination device, and the second path passes through the third network device in a third device cluster. In this way, if there are a plurality of paths between the first network device and the destination device, the first network device may calculate load of each path based on load information of a network device on a path, and select, based on the load of the path, a most appropriate target path for target packet transmission. In this way, a congestion status of a network device on a path is considered, so that information referenced by the network device during routing can more comprehensively reflect a congestion status of an entire transmission path, to find a most appropriate transmission path for packet transmission, and improve packet transmission performance.

In some possible implementations, the first path is a shortest path from the first network device to the destination device. Load information of the first path may be determined based on first load information of the second network device. The first load information of the second network device indicates a capability of the second network device to receive and forward a packet to a device in the second device cluster.

In some possible implementations, the first load information of the second network device is determined based on downlink traffic information of the second network device. The downlink traffic information of the second network device is related information of traffic sent by the second network device to another device in the second device cluster. The downlink traffic information of the second network device indicates information about traffic sent by the second network device to another device in the second device cluster. Therefore, higher downlink traffic of the second network device indicates a poorer capability the second network device can provide to forward traffic to another device in the second device cluster. It can be learned that, based on the downlink traffic information of the second network device, whether a large quantity of packets are being sent by the second network device to another device in the second device cluster may be determined, to determine a capability the second network device can provide to send a packet to another device in the second device cluster, and obtain the first load information of the second network device.

In some possible implementations, the second network device may notify the first load information of the second network device by sending the packet to the first network device. Specifically, the first load information may be carried in a payload part of the packet. Assuming that the second network device sends the first packet to the first network device, the first load information may be carried in a payload part of the first packet.

In some possible implementations, the first packet further includes first indication information, and the first indication information indicates that the payload part of the first packet includes the first load information of the second network device.

In some possible implementations, the first indication information is carried in a control protocol packet header of the first packet.

In some possible implementations, the control protocol packet header includes an NNP packet header, and the first indication information is carried in a subtype field of the NNP packet header.

In some possible implementations, the first packet further includes a link-layer packet header, the link-layer packet header includes second indication information, and the second indication information indicates that the first packet includes the control protocol packet header.

In some possible implementations, the second indication information is carried in a protocol field of the link-layer packet header.

In some possible implementations, the second path is a non-shortest path from the first network device to the destination device. Load information of the second path may be determined based on second load information of the third network device. The second load information of the third network device indicates a capability of the third network device to receive and forward a packet to a device outside the third device cluster.

In some possible implementations, the second load information of the third network device is determined based on uplink traffic information of the third network device. The uplink traffic information of the third network device indicates information about traffic received by the third network device from another device in the third device cluster. The uplink traffic received by the third network device needs to be forwarded by the third network device to another network device. Therefore, higher uplink traffic of the third network device indicates a poorer capability the third network device can provide to forward a packet to another device cluster. It can be learned that, based on the uplink traffic information of the third network device, whether a large quantity of packets are being sent by the third network device to another device may be determined, to determine a capability the third network device can provide to send a packet to a device in another device cluster, and obtain the second load information of the third network device.

In some possible implementations, the first network device may determine load information of a path with reference to a hop count of the path and a load status of a port corresponding to the path, to evaluate network performance of the path more comprehensively. Specifically, it is assumed that the first path corresponds to a first port on the first network device, and the second path corresponds to a second port on the first network device. In this case, when selecting the target path, the first network device may first determine the load information of the first path based on load information of the first port, a hop count of the first path, and the load information of the second network device. The first network device may further determine the load information of the second path based on load information of the second port, a hop count of the second path, and the load information of the second network device. Then, the first network device may determine the target path based on the load information of the first path and the load information of the second path.

According to a third aspect, an embodiment of this application provides a load information sending method. The method is applied to a first control plane device in a network architecture in which a control plane is separated from a forwarding plane. The first control plane device is configured to manage a first forwarding plane device in a first device cluster. Specifically, the first control plane device first obtains traffic information of the first forwarding plane device. Then, the first control plane device determines load information of the first forwarding plane device based on a traffic information of the first forwarding plane device, and sends the load information of the first forwarding plane device to a second forwarding plane device in a second forwarding plane device cluster. In this way, a granularity of load information of a forwarding plane device is refined, and routing accuracy is improved.

In some possible implementations, the first control plane device may send the load information of the first forwarding plane device to a second control plane device. The second control plane device is configured to manage the second forwarding plane device in the second forwarding plane device cluster.

In some possible implementations, the first control plane device may send the load information of the first forwarding plane device to the first forwarding plane device, and then the first forwarding plane device sends the load information of the first forwarding plane device to the second forwarding plane device.

According to a fourth aspect, this application provides a load information sending apparatus. The apparatus is used in a first network device in a first device cluster, and the apparatus includes: a transceiver unit, configured to obtain traffic information of the first network device; a processing unit, configured to determine load information of the first network device based on the traffic information of the first network device; and a sending unit, configured to send the load information of the first network device to a second network device, where the second network device belongs to a second network device cluster, the load information of the first network device is used for determining load information of a path including a first subpath, and the first subpath is a path from the second network device to the first network device.

In some possible implementations, the load information of the first network device includes first load information and/or second load information. The first load information is used for determining load information of a first path, the first path is a shortest path from the second network device to the first network device, and the first load information indicates a capability of the first network device to receive and forward a packet to a device in the first packet cluster. The second load information is used for determining load information of a second path, the second path is a path from the second network device to a third network device through the first network device, the second load information indicates a capability of the first network device to receive and forward a packet to a network device in a third device cluster, and the third network device belongs to the third device cluster.

In some possible implementations, the traffic information of the first network device includes downlink traffic information of the first network device. The processing unit is configured to determine the first load information based on the downlink traffic information of the first network device.

In some possible implementations, the traffic information of the first network device includes uplink traffic information of the first network device. The processing unit is configured to determine the second load information based on the uplink traffic information of the first network device.

In some possible implementations, the sending unit is specifically configured to send, by the first network device, a first packet to the second network device. The load information of the first network device is carried in a payload part of the first packet.

In some possible implementations, the first packet further includes first indication information, and the first indication information indicates that the payload part of the first packet includes the load information of the first network device.

In some possible implementations, the first indication information is carried in a control protocol packet header of the first packet.

In some possible implementations, the control protocol packet header includes an NNP packet header, and the first indication information is carried in a subtype field of the NNP packet header.

In some possible implementations, the first packet further includes a link-layer packet header, the link-layer packet header includes second indication information, and the second indication information indicates that the first packet includes the control protocol packet header.

In some possible implementations, the second indication information is carried in a protocol field of the link-layer packet header.

In some possible implementations, the transceiver unit is further configured to receive third load information sent by a fourth network device, where the third load information is determined based on traffic information of the fourth network device, and the fourth network device belongs to a fourth device cluster.

According to a fifth aspect, this application provides a packet sending apparatus. The apparatus is used in a first network device in a first device cluster, and the apparatus includes: a transceiver unit, configured to obtain a target packet to be sent to a destination device, where the destination device belongs to a second device cluster; a processing unit, configured to determine a target path from a first path and a second path based on load information of a second network device and load information of a third network device, where the first path is a path from the first network device to the destination device through the second network device, the second path is a path from the first network device to the destination device through the third device, the load information of the second network device is determined based on traffic information of the second network device, the load information of the third network device is determined based on traffic information of the third network device, the first network device belongs to the first device cluster, the second network device belongs to the second device cluster, and the third network device belongs to a third network device cluster; and a sending unit, configured to send the target packet to the destination device through the target path.

In some possible implementations, the first path is a shortest path from the first network device to the destination device. The transceiver unit is further configured to obtain first load information of the second network device, where the first load information of the second network device indicates a capability of the second network device to receive and forward a packet to a device in the second device cluster. The processing unit is specifically configured to determine load information of the first path based on the first load information of the second network device.

In some possible implementations, the first load information of the second network device is determined based on downlink traffic information of the second network device.

In some possible implementations, the transceiver unit is specifically configured to receive a first packet sent by the second network device. The first load information is carried in a payload part of the first packet.

In some possible implementations, the first packet further includes first indication information, and the first indication information indicates that the payload part of the first packet includes the first load information.

In some possible implementations, the first indication information is carried in a control protocol packet header of the first packet.

In some possible implementations, the control protocol packet header includes an NNP packet header, and the first indication information is carried in a subtype field of the NNP packet header.

In some possible implementations, the first packet further includes a link-layer packet header, the link-layer packet header includes second indication information, and the second indication information indicates that the first packet includes the control protocol packet header.

In some possible implementations, the second indication information is carried in a protocol field of the link-layer packet header.

In some possible implementations, the transceiver unit is further configured to obtain second load information of the third network device, where the second load information of the third network device indicates a capability of the third network device to receive and forward a packet to a device outside the third device cluster. The processing unit is specifically configured to determine load information of the second path based on the second load information of the third network device.

In some possible implementations, the second load information of the third network device is determined based on uplink traffic information of the third network device.

In some possible implementations, the first network device is connected to the second network device through a first port, and the first network device is connected to the third network device through a second port. The processing unit is specifically configured to: determine the load information of the first path based on load information of the first port, a hop count of the first path, and the load information of the second network device; determine load information of the second path based on load information of the second port, a hop count of the second path, and the load information of the third network device; and select the target path from the first path and the second path based on the load information of the first path and the load information of the second path.

According to a sixth aspect, this application provides a load information sending apparatus. The apparatus is used in a first control plane device, and the apparatus includes:
a transceiver unit, configured to obtain traffic information of a first forwarding plane device, where the first forwarding plane device belongs to a first forwarding plane device cluster;
a processing unit, configured to determine load information of the first forwarding plane device based on the traffic information of the first forwarding plane device; and
a sending unit, configured to send the load information of the first forwarding plane device to a second forwarding plane device, where the second forwarding plane device belongs to a second forwarding plane device cluster, the load information of the first forwarding plane device is used by the second forwarding plane device to determine load information of a first path, and the first path includes the second forwarding plane device and the first forwarding plane device.

According to a seventh aspect, this application provides a device. The device includes a memory and a processor. The memory is configured to store instructions, and the processor is configured to run the instructions, to enable the device to perform the method according to any one of the foregoing aspects.

According to an eighth aspect, this application provides a computer-readable storage medium, including instructions. When the instructions are executed on a processor, the processor is enabled to perform the method according to any one of the foregoing aspects.

According to a ninth aspect, this application provides a computer program product, including a program. When the program is run on a processor, the processor is enabled to perform the method according to any one of the foregoing aspects.

### BRIEF DESCRIPTION OF DRAWINGS

FIG. 1 is a schematic of a structure of a network architecture according to an embodiment of this application;
FIG. 2 is a schematic of another structure of a network architecture according to an embodiment of this application;
FIG. 3 is a schematic of information exchange of a load information sending method according to an embodiment of this application;
FIG. 4 is a schematic of information exchange of a packet sending method according to an embodiment of this application;
FIG. 5 is a schematic of a structure of a load information sending apparatus 700 according to an embodiment of this application;
FIG. 6 is a schematic of a structure of a packet sending apparatus 600 according to an embodiment of this application;
FIG. 7 is a schematic of a structure of a device 700 according to an embodiment of this application; and
FIG. 8 is a schematic of a structure of a device 800 according to an embodiment of this application.

### DESCRIPTION OF EMBODIMENTS

In a network that has a high requirement on packet transmission performance, for example, in a network architecture such as a high performance computing (High Performance Computing, HPC) cluster, a super computer network, or a network on chip, one or more direct paths may be established between any two device clusters. In this way, when network congestion does not occur on a direct path between device clusters, a cross-device cluster packet may be transmitted through a direct path between a source device cluster and a destination device cluster without being forwarded by another network device. This improves packet transmission performance.

If the network congestion occurs on the direct path between the device clusters, the packet transmission performance may be affected when the packet is transmitted through the direct path. Therefore, a network device at one end of the direct path may detect a congestion status of each local network interface, and transmit the packet through another network interface after the congestion occurs on the direct path. However, in this method, a congestion status of an ingress of a transmission path is used as a congestion status of an entire path for routing. For a transmission path with an intermediate hop, it is difficult to reflect the congestion status of the entire path by using the congestion status of the ingress. Therefore, a target path determined by using the foregoing method may not be a transmission path with optimal network performance, and packet transmission performance cannot be ensured.

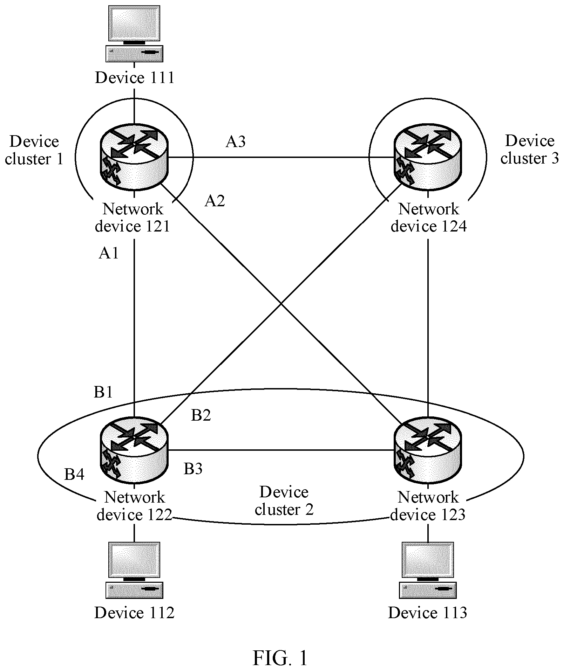

The following briefly describes a network architecture provided in FIG. 1.

FIG. 1 is a schematic of a structure of a system according to an embodiment of this application. The system shown in FIG. 1 includes a device 111, a device 112, a device 113, a network device 121, a network device 122, a network device 123, and a network device 124. The device 111 is connected to the network device 121, the device 112 is connected to the network device 123, the device 113 is connected to the network device 122, and any two of the network device 121, the network device 122, the network device 123, and the network device 124 are connected to each other. An identifier of a network interface connected to the network device 122 on the network device 121 is A1, an identifier of a network interface connected to the network device 123 on the network device 121 is A2, and an identifier of a network interface connected to the network device 124 on the network device 121 is A3. An identifier of a network interface connected to the network device 121 on the network device 122 is B1, an identifier of a network interface connected to the network device 124 on the network device 122 is B2, an identifier of a network interface connected to the network device 123 on the network device 122 is B3, and an identifier of a network interface connected to the device 112 on the network device 122 is B4. The network device 121 belongs to a device cluster 1, the network device 122 and the network device 123 belong to a device cluster 2, and the network device 124 belongs to a device cluster 3.

In some possible implementations, the device 111 is considered to belong to the device cluster 1, and the device 112 and the device 113 are considered to belong to the device cluster 2.

For a packet P1 sent from the device 111 to the device 112, the network device 121 may send the packet P1 through a direct path between the network device 121 and the network device 122; or send the packet P1 to the network device 122 through forwarding of the network device 123; or send the packet P1 to the network device 122 through forwarding of the network device 124. It can be learned that for the packet P1, there are at least three transmission paths: a path from "the network device 121 to the network device 122", a path from "the network device 121 to the network device 123 to the network device 122", and a path from "the network device 121 to the network device 124 to the network device 122".

Therefore, before forwarding the packet P1, the network device 121 may separately obtain load statuses of the network interface A1, the network interface A2, and the network interface A3, and determine an appropriate target path based on the load statuses. For example, assuming that load of the network interface A1 and load of the network interface A3 are high, and load of the network interface A2 is low, the network device 121 may send the packet P1 through the network interface A2, and the packet P1 is transmitted through the path from "the network device 121 to the network device 123 to the network device 122".

However, load of the network device 123 is not considered in the foregoing method. If the load of the network device 123 is high, the packet P1 sent by the network device 121 through the network interface A2 cannot be forwarded by the network device 123 in time. In this case, a delay of transmitting the packet P1 through the path from "the network device 121 to the network device 123 to the network device 122" may be longer than a delay of transmitting the packet P1 through the path from "the network device 121 to the network device 122".

It can be learned from the foregoing analysis that, because only a congestion status of a local network interface of the network device is considered, in a conventional routing method, an optimal target path cannot be selected for packet transmission.

To resolve the foregoing technical problem, embodiments of this application provide a load information sending method and a packet sending method, to implement a solution of determining load of an entire path based on load of a network device on a path, and determine an optimal target path for packet transmission.

The load information sending method and the packet sending method that are provided in embodiments of this application may be applied to an application scenario shown in FIG. 1. A data storage method and an information sending method may be performed by any one of the network device 121, the network device 122, the network device 123, and the network device 124. The load information sending method may be performed by a control plane of the network device, or may be performed by a forwarding plane of the network device. The packet sending method may be performed by the forwarding plane of the network device. Optionally, the forwarding plane may also be referred to as a data plane.

During actual application, a network device that is in a device cluster and that is connected to another device cluster is referred to as a cluster egress network device. For example, in the application scenario shown in FIG. 1, the network device 121, the network device 122, the network device 123, and the network device 124 are all cluster egress network devices. In the application scenario shown in FIG. 1, the cluster egress network device is connected to a device that serves as a source device or a destination device (where for example, the network device 121 is connected to the device 111).

However, in some other application scenarios, considering that there may be a large quantity of terminal devices or servers in the device cluster, network devices in the device cluster may be classified into a spine (spine) network device and a leaf (leaf) network device. The leaf network device is not connected to a device in another device cluster, but is connected only to a network device in a cluster or a device that serves as a source device or a destination device. The spine network device is a network device that is in a device cluster and that is connected to a network device in another device cluster. In other words, the spine network device is the foregoing cluster egress network device. In this network architecture, the technical solutions provided in embodiments of this application may be performed by the cluster egress network device.

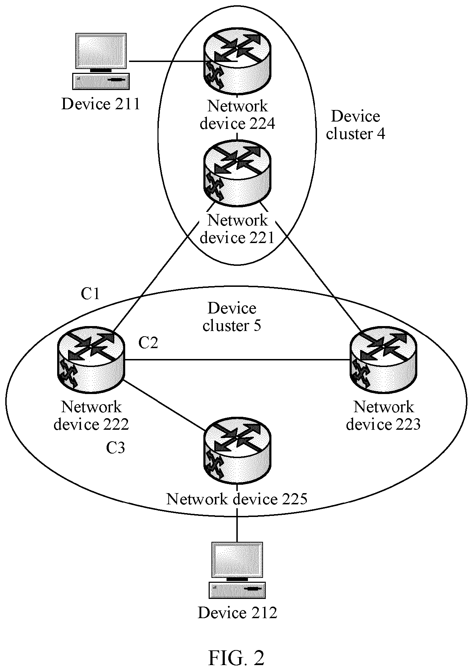

For example, FIG. 2 is a schematic of another structure of a system according to an embodiment of this application. The system shown in FIG. 2 includes a device 211, a device 212, a network device 221, a network device 222, a network device 223, a network device 224, and a network device 225. The network device 224 is separately connected to the device 211 and the network device 221, the network device 222 is separately connected to the network device 221, the network device 223, and the network device 225, the network device 223 is separately connected to the network device 221 and the network device 222, and the network device 225 is separately connected to the device 212 and the network device 222. An identifier of a network interface connected to the network device 221 on the network device 222 is C1, an identifier of a network interface connected to the network device 223 on the network device 222 is C2, and an identifier of a network interface connected to the device 212 on the network device 222 is C3. The network device 221 and the network device 224 belong to a device cluster 4, and the network device 222, the network device 223, and the network device 225 belong to a device cluster 5.

In some possible implementations, the device 211 is considered to belong to the device cluster 4, and the device 212 is considered to belong to the device cluster 5.

It can be learned from the foregoing descriptions that the network device 221, the network device 222, and the network device 223 in FIG. 2 are cluster egress network devices. Therefore, the load information sending method and the packet sending method provided in embodiments of this application may be performed by the network device 221, the network device 222, and the network device 223.

Optionally, in a network architecture in which a control plane is separated from a forwarding plane, the network device in the application scenarios shown in FIG. 1 and FIG. 2 is a forwarding plane device, and is configured to perform the packet sending method provided in embodiments of this application. In addition, embodiments of this application further provide the load information sending method. When performing the load information sending method, a control plane device may obtain traffic information of the forwarding plane device, determine load information of the forwarding plane device based on the traffic information of the forwarding plane device, and then forward the load information to another forwarding plane device through another control plane device or forwarding plane device. For descriptions of this part of content, refer to the following descriptions. Details are not described herein again.

Each network device in FIG. 1 and FIG. 2 may be a router (router) or a switch (switch). The device 111, the device 112, the device 113, the device 211, and the device 212 may be terminal devices or servers. In a supercomputer network or an HPC cluster, the foregoing device may be a computer device configured to perform data processing. It may be understood that although

FIG. 1 and FIG. 2 show only a limited quantity of network devices, during actual application, each device cluster may include two or more network devices. One or more links can be established between network devices in a device cluster. Details are not described herein.

In embodiments of this application, a cross-device cluster link may be referred to as a global link (global link), and a link within a device cluster is referred to as a local link (local link). For a packet sent from a source device to a destination device, a path that passes through a link between a device cluster to which the source device belongs and a device cluster to which the destination device belongs is referred to as a shortest path, and a path that passes through a network device in another device cluster for forwarding is referred to as a non-shortest path. In other words, for the packet P1, the path from "the network device 121 to the network device 122" is the shortest path, and another path is the non-shortest path.

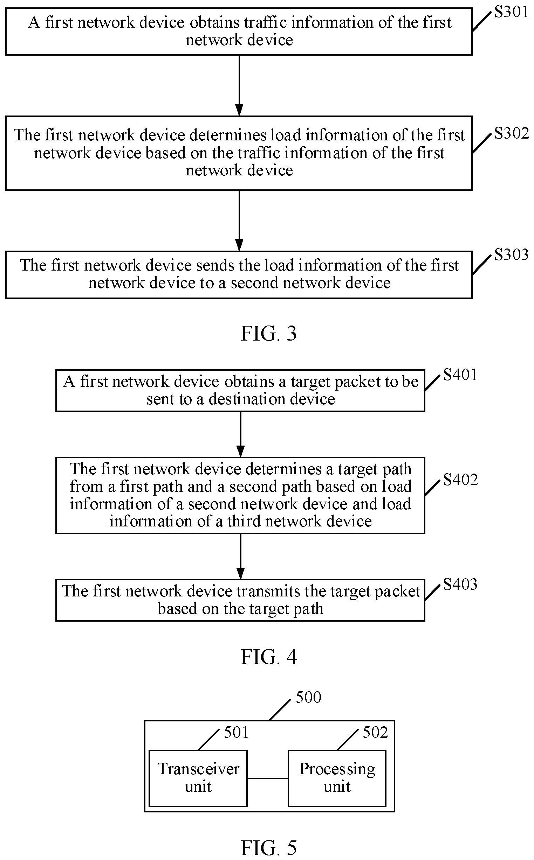

First, the load information sending method provided in embodiments of this application is described by using an example in which the technical solutions provided in embodiments of this application are performed by a first network device. FIG. 3 is a diagram of signaling exchange of a load information sending method according to an embodiment of this application. The method specifically includes S301, S302, and S303 below.

S301: A first network device obtains traffic information of the first network device.

In this embodiment of this application, the first network device belongs to a first device cluster, and the first network device is further connected to a device (for example, a second network device described below) in another device cluster. For example, the first network device may be any one of the network device 121, the network device 122, the network device 123, and the network device 124 in the embodiment shown in FIG. 1, or may be any one of the network device 221, the network device 222, and the network device 223 in the embodiment shown in FIG. 2. In a specific implementation, any network device that is in a device cluster and that is connected to another device cluster may be used as the first network device to perform the load information sending method provided in this embodiment of this application. If the first network device includes a plurality of network interfaces, the traffic information of the first network device may include traffic information of the plurality of network interfaces of the first network device.

To select a most appropriate transmission path for packet transmission, a network device may obtain load information of another network device. Load information of a network device is determined based on traffic information of the network device. Correspondingly, to determine load information of the first network device, the first network device may first obtain the traffic information of the first network device. The traffic information of the first network device may be, for example, traffic information of the first network device in a historical time period, or may be traffic information that is of the first network device in a future time period and that is predicted based on historical traffic information of the first network device. A load status of the first network device may be determined based on the traffic information of the first network device, so that another network device determines, based on the load status of the first network device, whether the first network device is applicable to packet forwarding.

In a specific implementation, the load information of the first network device may include downlink traffic information of the first network device and/or uplink traffic information of the first network device. The downlink traffic information of the first network device may be used for calculating first load information of the first network device, and the uplink traffic information of the first network device may be used for calculating second load information of the first network device. For descriptions of the first load information and the second load information, refer to the following descriptions. Details are not described herein.

The downlink traffic information of the first network device refers to information about traffic sent by the first network device to another device in the first device cluster. In some possible implementations, the downlink traffic information of the first network device is a total quantity of bytes of packets sent by the first network device to a device in the first device cluster in unit time.

For example, in the application scenario shown in FIG. 1, downlink traffic information of the network device 122 is a total quantity of bytes of packets sent by the network device 122 to the network device 123 in unit time. In the application scenario shown in FIG. 2, downlink traffic information of the network device 222 is a sum of a total quantity of bytes of packets sent by the network device 222 to the network device 223 in unit time and a total quantity of bytes of packets sent by the network device 222 to the network device 225 in unit time.

If the first network device is directly connected to a device such as a server or a computer, information about traffic sent by the first network device to the device may alternatively be used as a part of the downlink traffic information of the first network device. Correspondingly, in these implementations, the device connected to the first network device may be considered to belong to the first device cluster. To be specific, in the application scenario shown in FIG. 1, the downlink traffic information of the network device 122 may further include a total quantity of bytes of packets sent by the network device 122 to the device 112 in unit time. The device 112 belongs to the device cluster 2.

The uplink traffic information of the first network device refers to information about traffic received by the first network device from another device in the first device cluster. In some possible implementations, the uplink traffic information of the first network device is a total quantity of bytes of packets received by the first network device in unit time and sent by the device in the first device cluster to the first network device.

For example, in the application scenario shown in FIG. 1, uplink traffic information of the network device 122 is a total quantity of bytes of packets received by the network device 122 in unit time and sent by the network device 123 to the network device 122. In the application scenario shown in FIG. 2, uplink traffic information of the network device 222 is a sum of a total quantity of bytes of packets received by the network device 222 in unit time and sent by the network device 223 to the network device 222 and a total quantity of bytes of packets received by the network device 222 in unit time and sent by the network device 225 to the network device 222.

Similar to the downlink traffic information of the first network device, if the first network device is directly connected to a device such as a server or a computer, information about traffic sent by the device to the first network device may alternatively be used as a part of the uplink traffic information of the first network device. Correspondingly, in these implementations, the device connected to the first network device may be considered to belong to the first device cluster. To be specific, in the application scenario shown in FIG. 1, the uplink traffic information of the network device 122 may further include a total quantity of bytes of packets sent by the device 112 to the network device 122 in unit time. The device 112 belongs to the device cluster 2.

S302: The first network device determines the load information of the first network device based on the traffic information of the first network device.

After obtaining local traffic information, the first network device may determine the load information of the first network device based on the local traffic information. The load information of the first network device indicates a capability of the first network device to receive and forward a packet.

It can be learned from the foregoing descriptions that a cross-device cluster packet may be transmitted through a shortest path or a non-shortest path. If the packet is transmitted through the shortest path, the packet is directly sent from a device cluster to which a source device belongs to a device cluster to which a destination device belongs. If the packet is transmitted through the non-shortest path, the packet is sent from a device cluster to which a source device belongs to an intermediate device cluster, and is forwarded by one or more intermediate network devices to a device cluster to which a destination device belongs. In other words, the first network device may directly receive/send the cross-device cluster packet as a source device or a destination device of the packet. Alternatively, the first network device may forward the packet as an intermediate network device on the non-shortest path. In other words, the first network device may play different roles in a packet forwarding process.

Correspondingly, in this embodiment of this application, the load information of the first network device may include the first load information and/or the second load information that are/is used for calculating load information of a path when the first network device plays the different roles. Descriptions are separately provided below.

The first load information is used for calculating load information of the shortest path. To be specific, when the first network device is a network device on the shortest path, the first load information may be used as the load information of the first network device, to calculate the load information of the shortest path. For example, in the application scenario shown in FIG. 1, if the packet P1 is transmitted through the path from "the network device 121 to the network device 122", the network device 121 may calculate load of the path from "the network device 121 to the network device 122" by using first load information of the network device 122.

Based on the foregoing descriptions, the shortest path is a path from a device cluster to which a source device belongs to a device cluster to which a destination device belongs, and does not pass through another device cluster. If the first network device is a network device on the shortest path, the first network device belongs to the device cluster to which the source device belongs, or the first network device belongs to the device cluster to which the destination device belongs. If the first network device belongs to the network device cluster to which the destination device belongs, the first network device is configured to receive a packet sent by another device cluster to the first device cluster, and forward the packet to another device in the first device cluster.

In the foregoing process, a main indicator that affects packet transmission performance is a capability of the first network device to forward a packet to another device in the first device cluster. In other words, the first load information of the first network device indicates a capability of the first network device to receive and forward a packet to a device in the first device cluster.

Optionally, the first load information of the first network device is determined based on the downlink traffic information of the first network device. It can be learned from the foregoing descriptions that the downlink traffic information of the first network device indicates information about traffic sent by the first network device to another device in the first device cluster. Therefore, higher downlink traffic of the first network device indicates a poorer capability the first network device can provide to forward traffic to another device in the first device cluster. It can be learned that, based on the downlink traffic information of the first network device, whether a large quantity of packets are being sent by the first network device to another device in the first device cluster may be determined, to determine a capability the first network device can provide to send a packet to another device in the first device cluster.

In a possible implementation, the first load information of the first network device may be determined based on a congestion degree of a network interface. Specifically, the first network device may calculate a ratio of the downlink traffic of the first network device to downlink bandwidth of the first network device, and use the ratio as the first load information of the first network device. In this way, the first load information indicates a proportion at which the downlink bandwidth of the first network device is occupied. More occupied downlink bandwidth of the first network device indicates a poorer capability of the first network device to forward a packet to another device in the first device cluster.

For example, for the application scenario shown in FIG. 1, first load information of the network device 123 may be determined based on downlink traffic information of the network interface B3 and downlink traffic information of the network interface B4. Specifically, the first load information of the network device 123 may be equal to a ratio of a first packet quantity to first bandwidth. The first packet quantity is a sum of a total quantity of bytes of packets sent to the network device 123 through the network interface B3 in unit time and a total quantity of bytes of packets sent to the device 112 through the network interface B4 in unit time. The first bandwidth is a sum of theoretical transmit bandwidth of the network interface B3 and theoretical transmit bandwidth of the network interface B4.

For the application scenario shown in FIG. 2, first load information of the network device 222 may be determined based on downlink traffic information of the network interface C2 and downlink traffic information of the network interface C3. Specifically, the first load information of the network device 222 may be equal to a ratio of a second packet quantity to second bandwidth. The second packet quantity is a sum of a total quantity of bytes of packets sent to the network device 223 through the network interface C2 in unit time and a total quantity of bytes of packets sent to the device 212 through the network interface C3 in unit time. The second bandwidth is a sum of theoretical transmit bandwidth of the network interface C2 and theoretical transmit bandwidth of the network interface C3.

It may be understood that, if the first network device belongs to the device cluster to which the source device belongs, in other words, the first device cluster includes the source device, the first network device may be configured to determine load information of a path based on local load information and load information of another network device, to select an appropriate path for packet transmission. In this case, the first network device does not need to send the load information to another network device. Therefore, in the foregoing descriptions of the first load information, only a case in which the first device cluster is the device cluster to which the destination device belongs is considered. In other words, if the first network device is located on the shortest path for packet transmission and is not the source device of the packet, load information of the non-shortest path may be determined based on the second load information of the first network device.

The second load information is used for calculating the load information of the non-shortest path. To be specific, when the first network device is a network device on the non-shortest path, the second load information may be used as the load information of the first network device, to calculate the load information of the non-shortest path. For example, in the application scenario shown in FIG. 1, if the packet P1 is transmitted through the path from "the network device 121 to the network device 124 to the network device 122", the network device 121 may calculate load of the path from "the network device 121 to the network device 124 to the network device 122" by using second load information of the network device 124.

Based on the foregoing descriptions, the non-shortest path is a path from the device cluster to which the source device belongs to the device cluster to which the destination device belongs, with forwarding of one or more intermediate device clusters. If the first network device is a network device in an intermediate device cluster on the non-shortest path, when forwarding the packet, the first network device first receives a packet sent by a network device in another device cluster, and then forwards the received packet to a network device in another device cluster.

In the foregoing process, a main indicator that affects packet transmission performance is a capability of the first network device to forward a packet to a network device in another device cluster. To be specific, the second load information of the first network device indicates a capability of the first network device to receive and forward a packet to a network device in a device cluster other than the first device cluster.

Optionally, the second load information of the first network device is determined based on the uplink traffic information of the first network device. It can be learned from the foregoing descriptions that the uplink traffic information of the first network device indicates the information about the traffic that is received by the first network device and that is from another device in the first device cluster. The uplink traffic received by the first network device needs to be forwarded by the first network device to another network device. Therefore, higher uplink traffic of the first network device indicates a poorer capability the first network device can provide to forward a packet to another device cluster. It can be learned that, based on the uplink traffic information of the first network device, whether a large quantity of packets are being sent by the first network device to another device may be determined, to determine a capability of the first network device to send a packet to a device in another device cluster.

In a possible implementation, the second load information of the first network device may be determined based on a congestion degree of a network interface. Specifically, the first network device may calculate a ratio of the uplink traffic of the first network device to uplink bandwidth of the first network device, and use the ratio as the second load information of the first network device. In this way, the second load information indicates a proportion at which the uplink bandwidth of the first network device is occupied. More occupied uplink bandwidth of the first network device indicates a poorer capability of the first network device to forward a packet to the device in another device cluster.

For example, for the application scenario shown in FIG. 1, second load information of the network device 123 may be determined based on uplink traffic information of the network interface B3 and uplink traffic information of the network interface B4. Specifically, the second load information of the network device 123 may be equal to a ratio of a third packet quantity to third bandwidth. The third packet quantity is a total quantity of bytes of packets received by the network device 122 through the network interface B3 and the network interface B4 in unit time. The third bandwidth is a sum of theoretical receive bandwidth of the network interface B3 and theoretical receive bandwidth of the network interface B4.

For example, for the application scenario shown in FIG. 2, second load information of the network device 222 may be determined based on uplink traffic information of the network interface C2 and uplink traffic information of the network interface C3. Specifically, the second load information of the network device 222 may be equal to a ratio of a fourth packet quantity to fourth bandwidth. The fourth packet quantity is a sum of a total quantity of bytes of packets received by the network device 122 through the network interface C2 and the network interface C3 in unit time. The fourth bandwidth is a sum of theoretical receive bandwidth of the network interface C2 and theoretical receive bandwidth of the network interface C3.

It may be understood that, if the first network device belongs to the device cluster to which the source device belongs, the first network device may be configured to determine load information of a path based on local load information and load information of another network device, to select an appropriate path for packet transmission. In this case, the first network device does not need to send the load information to another network device. In addition, if the first network device belongs to the device cluster to which the destination device belongs, regardless of whether the packet is transmitted through the shortest path or the non-shortest path, a factor that affects packet transmission performance is the capability of the first network device to send a packet to another device in the first device cluster. Therefore, in the foregoing descriptions of the second load information, only a case in which the first network device is an intermediate forwarding device of the packet is considered. In other words, if the first network device is located on the non-shortest path for packet transmission, the load information of the non-shortest path may be determined based on the second load information of the first network device.

In this embodiment of this application, the first load information may also be referred to as minimum load (min_load) information. The second load information may also be referred to as non-minimum load (NM_load) information.

S303: The first network device sends the load information of the first network device to the second network device.

After determining the local load information, the first network device may send the load information of the first network device to the second network device. A device cluster to which the second network device belongs is different from the device cluster to which the first network device belongs. In this embodiment of this application, the device cluster to which the second network device belongs is referred to as a second device cluster. In this way, after receiving the packet, the second network device may determine, based on the load information of the first network device, a path for packet transmission.

Specifically, the load information of the first network device may be used by the second network device to determine load of a path including a first subpath. The first subpath is a link from the second network device to the first network device. To be specific, the load information of the first network device may be used for determining load information of a path from the second network device to the first network device, or may be used for determining load information of a path from the second network device to a third network device through the first network device. The third network device does not belong to the first device cluster.

According to the load information sending method provided in the embodiment shown in FIG. 3, the first network device may determine the load information of the first network device based on a status of forwarding traffic by the first network device, and notify the second network device in another device cluster of the load information of the first network device. The second network device may determine, based on the notified load information, the load information of the path for packet transmission, to perform routing during packet forwarding. In this way, a network device performs routing based on load information of another network device, instead of performing routing based only on a congestion status of a local network interface. In this way, a congestion status of a network device on a path is considered, so that information referenced by the network device during routing can more comprehensively reflect a congestion status of an entire transmission path, to find a most appropriate transmission path for packet transmission, and improve packet transmission performance. In addition, in this embodiment of this application, each network device connected to a network device in another device cluster may calculate load information of the network device. In this way, a granularity of the load information of the network device is refined, and routing accuracy is improved.

It can be learned from the foregoing descriptions that the load information of the first network device may include the first load information and the second load information. Correspondingly, if a packet that is received by the second network device and that is to be sent is a packet sent from the second device cluster to the first device cluster, the second network device may determine load information of a shortest path of the packet based on the first load information of the first network device. If the packet that is received by the second network device and that is to be sent is a packet sent from the second device cluster to a third device cluster, the second network device may determine load information of a non-shortest path of the packet based on the second load information of the first network device, where the non-shortest path passes through the first network device.

In other words, for a shortest path and a non-shortest path that pass through a same network device, load information of the shortest path and load information of the non-shortest path may be calculated based on different load information. In this way, different types of paths are evaluated by using different types of load information. This improves accuracy of calculating load information of the path, and improves routing accuracy.

The foregoing describes the load information of the first network device, and the following describes a method for notifying, by the first network device, the second network device of the load information of the first network device.

In some possible implementations, the load information of the first network device may be carried in a packet header sent by the first network device to the second network device. For example, in an internet protocol version 6 (Internet Protocol Version 6, IPv6) network, the load information of the first network device may be carried in a packet header of a packet sent by the first network device to the second network device.

In some other possible implementations, the load information of the first network device may be carried in a payload part sent by the first network device to the second network device. For example, the first network device may generate a packet that is used for transmitting the load information of the first network device, and send the packet to the second network device. Correspondingly, the payload part of the packet includes the load information (for example, the first load information and/or the second load information) of the first network device.

Optionally, if the load information of the first network device includes the first load information and the second load information, the first load information and the second load information may be carried in a same packet. For example, the first load information and the second load information are carried in a payload part of a first packet. Alternatively, the first load information and the second load information may be carried in different packets. For example, the first load information may be carried in a payload part of a first packet, and the second load information is carried in a payload part of a second packet. Similar to the first packet, the second packet is another packet also sent by the first network device to the second network device.

After receiving the first packet, the second network device may parse the first packet, to determine the load information of the first network device. Optionally, to help the second network device parse the first packet, a packet header of the first packet may include first indication information, to indicate that the payload part of the first packet includes the load information of the first network device. In this way, the second network device may obtain the load information of the first network device from the payload part of the first packet based on indication of the indication information in the packet header of the first packet.

In some possible implementations, the first indication information is carried in a control protocol packet header of the first packet. For example, the first indication information may be carried in an NNP packet header. Specifically, the control protocol packet header of the first packet may include the NNP packet header, and the NNP packet header includes a subtype field. The subtype field is used for carrying the first indication information.

In an actual application scenario, not all packets may include the control protocol packet header. Correspondingly, the first packet may further include second indication information, to indicate that the first packet includes the control protocol packet header. In this way, the second network device may parse the control protocol packet header of the first packet based on the second indication information in the first packet, obtain the first indication information from the control protocol packet header of the first packet, and then obtain the load information of the first network device based on the indication of the first indication information.

Specifically, the second indication information may be carried in a link-layer packet header of the first packet. For example, in some possible implementations, the second indication information is carried in a protocol field of the link-layer packet header of the first packet.

In addition, embodiments of this application further provide a load information obtaining method applied to a network architecture in which a control plane device is separated from a forwarding plane device. The method may be applied to a first control plane device. The first control plane device is configured to manage a first forwarding plane device in a first forwarding plane device cluster.

Specifically, the first control plane device may obtain traffic information of the first forwarding plane device, and the first forwarding plane device belongs to the first forwarding plane device cluster. Then, the first control plane device may determine load information of the first forwarding plane device based on the traffic information of the first forwarding plane device, and send the load information of the first forwarding plane device to a second forwarding plane device in a second forwarding plane device cluster. Optionally, the first control plane device may send the load information of the first forwarding plane device to a control plane device corresponding to the second forwarding plane device cluster, so that the control plane device sends the load information of the first forwarding plane device to a forwarding plane device in the second forwarding plane device cluster. Alternatively, the first control plane device may send the load information of the first forwarding plane device to the first forwarding plane device, and the first forwarding plane device sends the load information of the first forwarding plane device to a forwarding plane device in the second forwarding plane device cluster. A method for sending the load information of the first forwarding plane device by the first control plane device is not limited in this embodiment of this application.

Similar to the embodiment shown in FIG. 3, the traffic information of the first forwarding plane device may include uplink traffic information and downlink traffic information. The load information of the first forwarding plane device includes first load information and second load information. During actual application, when a control plane device is separated from a forwarding plane device, an action performed by the control plane device is similar to that in the embodiment shown in FIG. 3, and there is a difference between a device corresponding to traffic information and a device corresponding to load information.

The foregoing describes a method for sending, by the first network device, the load information of the first network device to the second network device. The following describes a method for determining, by the first network device based on the load information of the second network device, a transmission path for packet forwarding. FIG. 4 is a diagram of signaling exchange of a packet sending method according to an embodiment of this application. The method specifically includes S401, S402, and S403 below.

It may be understood that a "first network device" in the embodiment shown in FIG. 4 and the "first network device" in embodiments shown in FIG. 3 may be a same network device, or may be different network devices.

S401: The first network device obtains a target packet to be sent to a destination device.

In this embodiment, the first network device belongs to a first device cluster, and the destination device belongs to a second device cluster. For example, the destination device may be a server in the second device cluster, or a network device directly connected to the destination device belongs to the second device cluster.

After obtaining the target packet, the first network device determines that the target packet is a packet that needs to be sent to the second device cluster, and continues to perform subsequent steps accordingly.

S402: The first network device determines a target path from a first path and a second path based on load information of a second network device and load information of a third network device.

Because the target packet is a packet sent from the first device cluster to the second device cluster, the first network device may determine a plurality of transmission paths from the first network device to the destination device based on a topology structure of a network system, and select one path from these paths as the target path to transmit the target packet.

In this embodiment, the first path and the second path exist between the first network device and the destination device. The first path is a shortest path from the first network device to the destination device. In the second device cluster, a device directly connected to the first network device is referred to as the second network device, and the first path passes through the second network device. The second path is a non-shortest path from the first network device to the destination device. The second path passes through the third network device in a third device cluster. To be specific, the second path is a path from the first network device to the third network device and then from the third network device to the second network device.

To select a path with better performance from the first path and the second path to transmit the target packet, the first network device may separately determine load information of the first path and load information of the second path. The load information of the first path is determined based on the load information of the second network device, and the load information of the second path is determined based on the load information of the third network device. In this way, load information of a path determined based on load information of a network device on the path may reflect a load status of a network device other than the first network device, and an overall load status of the path is more comprehensively measured. In this way, accuracy of calculating the load information of the path is improved, and routing accuracy is improved.

It may be understood that before determining the load information of the first path, the first network device first obtains the load information of the second network device. Before determining the load information of the second path, the first network device first obtains the load information of the third network device. Specifically, the second network device may send the load information of the second network device to the first network device in the implementation shown in FIG. 3, or the third network device may send the load information of the third network device to the first network device in the implementation shown in FIG. 3. For a method for determining the load information, refer to the descriptions of the embodiment shown in FIG. 3. Details are not described herein again.

It can be learned from the foregoing descriptions that load information of the first network device may include first load information and second load information. Similarly, in this embodiment, the load information of the second network device may also include first load information and second load information, and the load information of the third network device may also include first load information and second load information. The first load information of the second network device indicates a capability of the second network device to forward a packet to another device in the second device cluster, the second load information of the second network device indicates a capability of the second network device to forward a packet to a network device in a device cluster other than the second device cluster, the first load information of the third network device indicates a capability of the third network device to forward a packet to another device in the third device cluster, and the second load information of the third network device indicates a capability of the third network device to forward a packet to a network device in a device cluster other than the third device cluster.

Because the first path is the shortest path from the first network device to the destination device, and both the destination device and the second network device belong to the second device cluster, the first network device may calculate the load information of the first path based on the first load information of the second network device. Because the second path is the non-shortest path from the first network device to the destination device, and the destination device and the third network device belong to different device clusters, the first network device may calculate the load information of the second path based on the second load information of the third network device.

It can be learned that, for the shortest path for transmitting the target packet and the non-shortest path for transmitting the target packet, overall load information of the path is calculated by using different types of load information, so that the load information of the path obtained through calculation can more accurately reflect network performance of the path, to facilitate subsequent selection of the target path.

During actual application, it is considered that a hop count of the shortest path is less than a hop count of the non-shortest path, and a hop count of the path affects an overall delay of the path. Therefore, the first network device may separately determine the load information of the first path and the load information of the second path with reference to a hop count of the first path and a hop count of the second path. Specifically, the first network device may multiply the hop count of the first path by the first load information of the second network device, and multiply the hop count of the second path by the second load information of the third network device. Then, the first network device compares results obtained through the two times of multiplication.

If a product of the hop count of the first path and the first load information of the second network device is not greater than a product of the hop count of the second path and the second load information of the third network device, the first network device may determine the first path as the target path, to transmit the target packet through the first path. If a product of the hop count of the first path and the first load information of the second network device is greater than a product of the hop count of the second path and the second load information of the third network device, the first network device may determine the second path as the target path, to transmit the target packet through the second path.

It can be learned from the foregoing descriptions that the first network device may further perform routing based on a congestion status of a network port. In this embodiment, the first network device may determine the load information of the first path and the load information of the second path based on the congestion status of the network port and with reference to the load information of the second network device and the load information of the third network device.

For example, in some possible implementations, the first network device may normalize a congestion status of a network port corresponding to the second network device. Then, the first network device may compare normalized first load information of the second network device with a normalized congestion status of the network port, and then calculate the load information of the first path by using a larger one of the normalized first load information of the second network device and the normalized congestion status of the network port. Similarly, the first network device may further normalize a congestion status of a network port corresponding to the third network device. Then, the first network device may compare normalized second load information of the third network device with a normalized congestion status of the network port, and then calculate the load information of the second path by using a larger one of the normalized second load information of the third network device and the normalized congestion status of the network port.

For example, the application scenario shown in FIG. 1 is used as an example for description. It is assumed that the network device 121 is the first network device, the network device 122 is the second network device, the network device 124 is the third network device, and the device 112 is the destination device of the target packet.

To select a target path from the path from "the network device 121 to the network device 122" and the path from "the network device 121 to the network device 124 to the network device 122" to transmit the target packet, the network device 121 may obtain first load information of the network device 122 and second load information of the network device 124. In addition, the network device 121 may further obtain a congestion status of the network interface A1 and a congestion status of the network interface A3.

Then, the network device 121 may compare normalized first load information of the network device 122 with a normalized congestion status of the network interface A1, and multiply a larger one of the normalized first load information and the normalized congestion status of the network interface A1 by a hop count of the path from "the network device 121 to the network device 122", to obtain load information of the path from "the network device 121 to the network device 122". The network device 121 may compare normalized second load information of the network device 124 with a normalized congestion status of the network interface A3, and multiply a larger one of the normalized second load information of the network device 124 with the normalized congestion status of the network interface A3 by a hop count of the path from "the network device 121 to the network device 124 to the network device 122", to obtain load information of the path from "the network device 121 to the network device 124 to the network device 122".

Then, the network device 121 may compare the load information of the path from "the network device 121 to the network device 122" with the load information of the path from "the network device 121 to the network device 124 to the network device 122", and determine a path with smaller load information as the target path. If the load information of the path from "the network device 121 to the network device 122" is equal to the load information of the path from "the network device 121 to the network device 124 to the network device 122", the network device 121 may determine the path from "the network device 121 to the network device 122" as the target path.

It may be understood that, if there are a plurality of non-shortest paths between the first network device and the destination device, the first network device may determine load information of each non-shortest path by using the foregoing method for determining the load information of the second path, to determine the target path based on the load information of the first path, the load information of the second path, and the load information of the plurality of non-shortest paths. In this way, even if there are a large quantity of optional paths, a transmission path with optimal network performance can be found by determining load information of each path and performing routing based on the load information.

S403: The first network device transmits the target packet based on the target path.

After determining the target path, the first network device may transmit the target packet based on the target path. In this way, the target path for packet transmission is selected by the first network device from a plurality of paths based on load information of the plurality of paths, and the load information of the path is calculated based on load information of a network device on the path. In this case, load information that is of the path and that is calculated based on the load information at a network device granularity level can more accurately reflect network performance of the path, so that an optimal path is found to transmit the target packet, and transmission performance of the target packet is ensured.

Refer to FIG. 5. Embodiments of this application further provide a load information sending apparatus 500. The load information sending apparatus 500 may implement a function of the first network device in the embodiment shown in FIG. 3. The load information sending apparatus 500 includes a transceiver unit 510 and a processing unit 520. The transceiver unit 510 is configured to implement a function of data receiving and sending in the embodiment shown in FIG. 3. The processing unit 520 is configured to implement a function of data processing in the embodiment shown in FIG. 3.

Specifically, the transceiver unit 510 is configured to obtain a target packet to be sent to a destination device, where the destination device belongs to a second device cluster.

A processing unit 520 is configured to determine a target path from a first path and a second path based on load information of a second network device and load information of a third network device, where the first path is a path from the first network device to the destination device through the second network device, the second path is a path from the first network device to the destination device through the third network device, the load information of the second network device is determined based on traffic information of the second network device, the load information of the third network device is determined based on traffic information of the third network device, the first network device belongs to a first device cluster, the second network device belongs to the second device cluster, and the third network device belongs to a third network device cluster.

The transceiver unit 510 is further configured to send the target packet to the destination device through the target path.

For a specific execution process, refer to the detailed descriptions of corresponding steps in the embodiment shown in FIG. 3. Details are not described herein again.

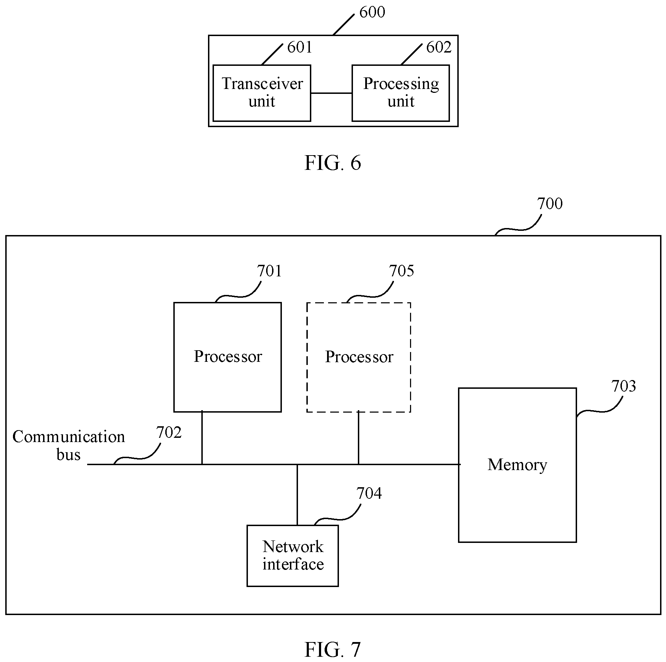

Refer to FIG. 6. Embodiments of this application further provide a packet sending apparatus 600. The packet sending apparatus 600 may implement a function of the first network device in the embodiment shown in FIG. 4. The packet sending apparatus 600 includes a transceiver unit 610 and a processing unit 620. The transceiver unit 610 is configured to implement a function of information receiving and sending in the embodiment shown in FIG. 4. The processing unit 620 is configured to implement a function of data processing in the embodiment shown in FIG. 4.

Specifically, the transceiver unit 610 is configured to obtain a target packet to be sent to a destination device, where the destination device belongs to a second device cluster.

A transceiver module 620 is configured to determine a target path from a first path and a second path based on load information of a second network device and load information of a third network device, where the first path is a path from the first network device to the destination device through the second network device, the second path is a path from the first network device to the destination device through the third network device, the load information of the second network device is determined based on traffic information of the second network device, the load information of the third network device is determined based on traffic information of the third network device, the first network device belongs to a first device cluster, the second network device belongs to the second device cluster, and the third network device belongs to a third network device cluster.

The transceiver unit 610 is further configured to send the target packet to the destination device through the target path.

For a specific execution process, refer to the detailed descriptions of corresponding steps in the embodiment shown in FIG. 4. Details are not described herein again.

It should be noted that, in embodiments of this application, division into modules (units) is an example, and is merely logical function division. During actual implementation, another division manner may be used. Functional modules in embodiments of this application may be integrated into one module, or each of the modules may exist alone physically, or two or more modules are integrated into one module. For example, in the foregoing embodiment, a transceiver module and a processing module may be a same module or different modules. The integrated module may be implemented in a form of hardware, or may be implemented in a form of a software functional module.

FIG. 7 is a schematic of a structure of a device 700 according to an embodiment of this application. A load information sending apparatus 500 and the packet sending apparatus 600 in the foregoing descriptions may be implemented by using the device shown in FIG. 7. Refer to FIG. 7. The device 700 includes at least one processor 701, a communication bus 702, and at least one network interface 704. Optionally, the device 700 may further include a memory 703.

Specifically, when the units and the modules described in FIG. 5 are implemented by software, software or program code needed for performing a corresponding action is stored in the memory 703. The processor 701 is configured to execute a program or instructions in the memory 703, to implement processing steps of S301, S303, and S303 in the embodiment shown in FIG. 3, or implement processing steps of S401, S402, and S403 in the embodiment shown in FIG. 4. The network interface 704 is configured to implement communication between the apparatus and another device.

Alternatively, when the units and the modules described in FIG. 7 are implemented by software, software or program code needed for performing a corresponding action is stored in the memory 703. The processor 701 is configured to execute a program or instructions in the memory 703, to implement processing steps in the foregoing embodiment. The network interface 703 is configured to implement communication between the apparatus and another device.

The processor 701 may be a general-purpose central processing unit (Central Processing Unit, CPU), an application-specific integrated circuit (Application-specific Integrated Circuit, ASIC), or one or more integrated circuits (Integrated Circuits, ICs) configured to control program execution of solutions of this application. The processor may be configured to process a packet or data, to implement the method provided in embodiments of this application.

For example, when the first network device in FIG. 3 is implemented by using the device shown in FIG. 7, the processor may be configured to: obtain traffic information of the first network device; determine load information of the first network device based on the traffic information of the first network device; and send the load information of the first network device to a second network device.

When the first network device in FIG. 6 is implemented by using the device shown in FIG. 7, the processor may be configured to: obtain a target packet to be sent to a destination device, where the destination device belongs to a second device cluster; determine a target path from a first path and a second path based on load information of a second network device and load information of a third network device; and send the target packet to the destination device through the target path.

The communication bus 702 is configured to transmit information between the processor 701, the network interface 704, and the memory 703.

The memory 703 may be a read-only memory (Read-only Memory, ROM) or another type of static storage device that may store static information and instructions. The memory 703 may alternatively be a random access memory (Random Access Memory, RAM) or another type of dynamic storage device that may store dynamic information and instructions, or may be a compact disc read-only memory (Compact Disc Read-only Memory, CD-ROM) or another optical disc storage, an optical disc storage (including a compact disc, a laser disc, an optical disc, a digital versatile disc, a Blu-ray disc, and the like), a disk storage medium or another magnetic storage device, or any other medium that can be configured to carry or store expected program code in a form of instructions or a data structure and can be accessed by a computer. However, the memory 703 is not limited thereto. The memory 703 may exist independently and is connected to the processor 701 through the communication bus 702. Alternatively, the memory 703 may be integrated with the processor 701.

Optionally, the memory 703 is configured to store program code or instructions for executing the technical solutions provided in embodiments of this application, and the processor 701 controls the execution. The processor 701 is configured to execute the program code or the instructions stored in the memory 703. The program code may include one or more software modules. Optionally, the processor 701 may also store program code or instructions for executing the technical solutions provided in embodiments of this application. In this case, the processor 701 does not need to read the program code or the instructions from the memory 703.

The network interface 704 may be an apparatus such as a transceiver, and is configured to communicate with another device or a communication network. The communication network may be an Ethernet, a radio access network (RAN), a wireless local area network (Wireless Local Area Network, WLAN), or the like. In embodiments of this application, the network interface 704 may be configured to receive a packet sent by another node in a segment routing network, and may also send a packet to another node in the segment routing network. The network interface 704 may be an Ethernet (Ethernet) interface, a fast Ethernet (Fast Ethernet, FE) interface, a gigabit Ethernet (Gigabit Ethernet, GE) interface, or the like.

In a specific implementation, in an embodiment, the device 700 may include a plurality of processors, for example, the processor 701 and a processor 705 shown in FIG. 7. Each of these processors may be a single-core (single-CPU) processor, or may be a multi-core (multi-CPU) processor. The processor herein may be one or more devices, circuits, and/or processing cores configured to process data (for example, computer program instructions).

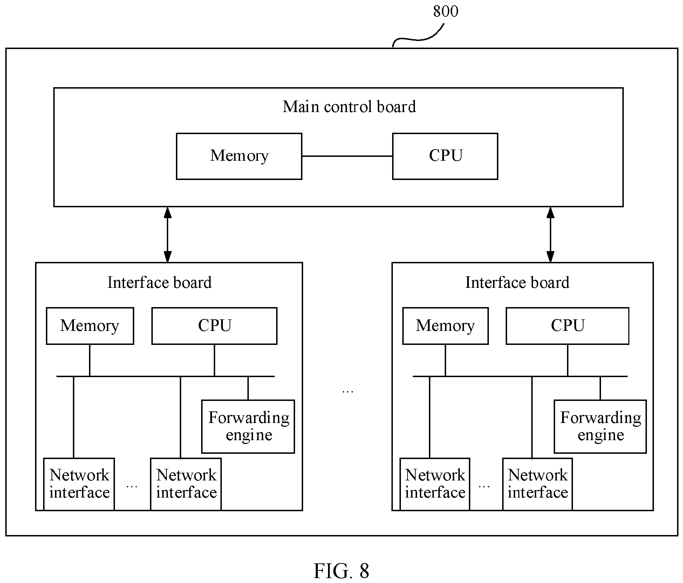

FIG. 8 is a schematic of a structure of a device 800 according to an embodiment of this application. The first network device in FIG. 3 and FIG. 4 may be implemented by using the device shown in FIG. 8. Refer to the schematic of the structure of the device shown in FIG. 8. The device 800 includes a main control board and one or more interface boards. The main control board is communicatively connected to the interface board. The main control board is also referred to as a main processing unit (Main Processing Unit, MPU) or a route processor card (Route Processor Card). The main control board includes a CPU and a memory, and is responsible for controlling and managing each component in the device 800, including route computing, and a device management and maintenance function. The interface board is also referred to as a line processing unit (Line Processing Unit, LPU) or a line card (Line Card), and is configured to receive and send a packet. In some embodiments, the main control board communicates with the interface board through a bus, or the interface boards communicate with each other through a bus. In some embodiments, the interface boards communicate with each other through a switch fabric board. In this case, the device 800 also includes the switch fabric board. The switch fabric board is communicatively connected to the main control board and the interface board. The switch fabric board is configured to forward data between the interface boards. The switch fabric board may also be referred to as a switch fabric unit (Switch Fabric Unit, SFU). The interface board includes a CPU, a memory, a forwarding engine, and an interface card (Interface Card, IC). The interface card may include one or more network interfaces. The network interface may be an Ethernet interface, an FE interface, a GE interface, or the like. The CPU is communicatively connected to the memory, the forwarding engine, and the interface card. The memory is configured to store a forwarding table. The forwarding engine is configured to forward the received packet based on the forwarding table stored in the memory. If a destination address of the received packet is an IP address of the device 800, the packet is sent to the CPU of the main control board or the interface board for processing. If a destination address of the received packet is not an IP address of the device 800, the forwarding table is searched based on the destination address. If a next hop and an outbound interface that correspond to the destination address are found in the forwarding table, the packet is forwarded to the outbound interface corresponding to the destination address. The forwarding engine may be a network processor (Network Processor, NP). The interface card is also referred to as a subcard, and can be installed on the interface board. The interface card is responsible for converting an optical/electrical signal into a data frame, checking validity of the data frame, and forwarding the data frame to the forwarding engine or the CPU of the interface board. In some embodiments, the CPU may also perform a function of the forwarding engine, for example, implement soft forwarding based on a general-purpose CPU, so that the interface board does not need the forwarding engine. In some embodiments, the forwarding engine may be implemented by the ASIC or a field programmable gate array (Field Programmable Gate Array, FPGA). In some embodiments, the memory that stores the forwarding table may also be integrated into the forwarding engine as a part of the forwarding engine.

Embodiments of this application further provide a chip system, including a processor. The processor is coupled to a memory, the memory is configured to store a program or instructions, and when the program or the instructions is/are executed by the processor, the chip system is enabled to implement the load information sending method performed by the first network device in the embodiment shown in FIG. 3, or the chip system is enabled to implement the packet sending method performed by the first network device in the embodiment shown in FIG. 4.

Optionally, there may be one or more processors in the chip system. The processor may be implemented by hardware or may be implemented by software. When the processor is implemented by hardware, the processor may be a logic circuit, an integrated circuit, or the like. When the processor is implemented by software, the processor may be a general-purpose processor, and is implemented by reading software code stored in a memory.

Optionally, there may be one or more memories in the chip system. The memory may be integrated with the processor, or may be disposed separately from the processor. This is not limited in this application. For example, the memory may be a non-transitory processor, for example, a read-only memory ROM. The memory and the processor may be integrated onto a same chip, or may be separately disposed on different chips. A type of the memory and a manner of disposing the memory and the processor are not specifically limited in this application.

For example, the chip system may be an FPGA, an ASIC, a system on chip (System on Chip, SoC), a CPU, an NP, a digital signal processing circuit (Digital Signal Processor, DSP), a micro controller unit (Micro Controller Unit, MCU), a programmable controller (Programmable Logic Device, PLD), or another integrated chip.

It should be understood that the steps in the foregoing method embodiments may be completed by using an integrated logic circuit of hardware in the processor or instructions in a form of software. The steps of the method disclosed with reference to embodiments of this application may be directly performed by a hardware processor, or may be performed by using a combination of hardware in the processor and a software module.

Embodiments of this application further provide a computer-readable storage medium, including instructions. When the instructions are run on a computer, the computer is enabled to perform the information receiving method that is provided in the foregoing method embodiments and that is performed by the forwarding plane device, or perform the load information sending method that is provided in the foregoing method embodiments and that is performed by the first network device, or perform the packet sending method that is provided in the foregoing method embodiments and that is performed by the first network device.

Embodiments of this application further provide a computer program product including instructions. When the computer program product runs on a computer, the computer is enabled to perform the load information sending method that is provided in the foregoing method embodiments and that is performed by the first network device, or perform the packet sending method that is provided in the foregoing method embodiments and that is performed by the first network device.

In the specification, the claims, and the accompanying drawings of this application, the terms such as "first", "second", "third", and "fourth" (if existent) are used for distinguishing between similar objects but do not necessarily indicate a specific order or sequence. It should be understood that data termed in such a way is interchangeable in an appropriate circumstance, so that embodiments described herein can be implemented in other orders than the order illustrated or described herein. In addition, the terms "include" and "have" and any other variants thereof mean to cover a non-exclusive inclusion, for example, a process, a method, a system, a product, or a device that includes a list of steps or units is not necessarily limited to those steps or units, but may include other steps or units not expressly listed or inherent to such a process, method, product, or device.

It may be clearly understood by persons skilled in the art that, for convenient and brief description, for a detailed working process of the foregoing system, apparatus, and unit, refer to a corresponding process in the foregoing method embodiments, and details are not described herein again.

In the several embodiments provided in this application, it should be understood that, the disclosed system, apparatus, and method may be implemented in another manner. For example, the described apparatus embodiments are merely examples. For example, the unit division is merely logical module division and may be another division manner during actual implementation. For example, a plurality of units or components may be combined or integrated into another system, or some features may be ignored, or not performed. In addition, the displayed or discussed mutual couplings or direct couplings or communication connections may be implemented through some interfaces. Indirect couplings or communication connections between the apparatuses or the units may be implemented in electrical, mechanical, or other forms.

The units described as separate parts may or may not be physically separate, and components displayed as units may or may not be physical units, and may be located at one location, or may be distributed on a plurality of network units. Some or all of the units may be obtained based on an actual requirement to achieve the objectives of the solutions of embodiments.

In addition, all modules and units in embodiments of this application may be integrated into one processing unit, or each of the units may exist alone physically, or two or more units are integrated into one unit. The integrated unit may be implemented in a form of hardware, or may be implemented in a form of a software module unit.

When the integrated unit is implemented in a form of a software module unit and sold or used as an independent product, the integrated unit may be stored in one computer-readable storage medium. Based on such understanding, the technical solutions of this application essentially, or the part contributing to the conventional technology, or all or some of the technical solutions may be implemented in a form of a software product. The computer software product is stored in one storage medium and includes several instructions for instructing a computer device (which may be a personal computer, a server, a network device, or the like) to perform all or some of the steps of the method in embodiments of this application. The storage medium includes any medium, such as a USB flash drive, a removable hard disk, a read-only memory (ROM, Read-Only Memory), a random access memory (RAM, Random Access Memory), a magnetic disk, or an optical disc, that can store program code.

Persons skilled in the art should be aware that in the foregoing one or more examples, functions described in the present invention may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communication medium, where the communication medium includes any medium that enables a computer program to be transmitted from one place to another. The storage medium may be any available medium that can be accessed by a general-purpose or dedicated computer.

In the foregoing specific implementations, the objectives, the technical solutions, and the beneficial effects of the present invention are further described in detail. It should be understood that the foregoing descriptions are merely specific implementations of the present invention.

In conclusion, the foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, and such modifications or replacements do not cause the essence of corresponding technical solutions to depart from the scope of the technical solutions of embodiments of this application.

## Claims

1. A load information sending method, wherein the method is applied to a first network device in a first device cluster, and the method comprises:
obtaining, by the first network device, traffic information of the first network device;
determining, by the first network device, load information of the first network device based on the traffic information of the first network device; and
sending, by the first network device, the load information of the first network device to a second network device, wherein the second network device belongs to a second network device cluster, the load information of the first network device is used for determining load information of a path comprising a first subpath, and the first subpath is a path from the second network device to the first network device.

2. The method according to claim 1, wherein the load information of the first network device comprises first load information and/or second load information, wherein
the first load information is used for determining load information of a first path, the first path is a shortest path from the second network device to the first network device, and the first load information indicates a capability of the first network device to receive and forward a packet to a device in the first packet cluster; and the second load information is used for determining load information of a second path, the second path is a path from the second network device to a third network device through the first network device, the second load information indicates a capability of the first network device to receive and forward a packet to a network device in a third device cluster, and the third network device belongs to the third device cluster.

3. The method according to claim 2, wherein the traffic information of the first network device comprises downlink traffic information of the first network device; and
the determining, by the first network device, load information of the first network device based on the traffic information of the first network device comprises:
determining, by the first network device, the first load information based on the downlink traffic information of the first network device.

4. The method according to claim 2, wherein the traffic information of the first network device comprises uplink traffic information of the first network device; and
the determining, by the first network device, load information of the first network device based on the traffic information of the first network device comprises:
determining, by the first network device, the second load information based on the uplink traffic information of the first network device.

5. The method according to any one of claims 2 to 4, wherein the sending, by the first network device, the load information of the first network device to a second network device comprises:
sending, by the first network device, a first packet to the second network device, wherein the load information of the first network device is carried in a payload part of the first packet.

6. The method according to claim 5, wherein the first packet further comprises first indication information, and the first indication information indicates that the payload part of the first packet comprises the load information of the first network device.

7. The method according to claim 6, wherein the first indication information is carried in a control protocol packet header of the first packet.

8. The method according to claim 7, wherein the control protocol packet header comprises a neighbor notification protocol NNP packet header, and the first indication information is carried in a subtype field of the NNP packet header.

9. The method according to claim 7 or 8, wherein the first packet further comprises a link-layer packet header, the link-layer packet header comprises second indication information, and the second indication information indicates that the first packet comprises the control protocol packet header.

10. The method according to claim 9, wherein the second indication information is carried in a protocol field of the link-layer packet header.

11. The method according to any one of claims 1 to 10, wherein the method further comprises:
receiving, by the first network device, third load information sent by a fourth network device, wherein the third load information is determined based on traffic information of the fourth network device, and the fourth network device belongs to a fourth device cluster.

12. A packet sending method, wherein the method is applied to a first network device in a first device cluster, and the method comprises:
obtaining, by the first network device, a target packet to be sent to a destination device, wherein the destination device belongs to a second device cluster;
determining, by the first network device, a target path from a first path and a second path based on load information of a second network device and load information of a third network device, wherein the first path is a path from the first network device to the destination device through the second network device, the second path is a path from the first network device to the destination device through the third network device, the load information of the second network device is determined based on traffic information of the second network device, the load information of the third network device is determined based on traffic information of the third network device, the second network device belongs to the second device cluster, and the third network device belongs to a third network device cluster; and
sending, by the first network device, the target packet to the destination device through the target path.

13. The method according to claim 12, wherein the first path is a shortest path from the first network device to the destination device, and the method further comprises:
obtaining, by the first network device, first load information of the second network device, wherein the first load information of the second network device indicates a capability of the second network device to receive and forward a packet to a device in the second device cluster; and
determining, by the first network device, load information of the first path based on the first load information of the second network device.

14. The method according to claim 13, wherein the first load information of the second network device is determined based on downlink traffic information of the second network device.

15. The method according to claim 13 or 14, wherein the obtaining, by the first network device, first load information of the second network device comprises:
receiving, by the first network device, a first packet sent by the second network device, wherein the first load information is carried in a payload part of the first packet.

16. The method according to claim 15, wherein the first packet further comprises first indication information, and the first indication information indicates that the payload part of the first packet comprises the first load information.

17. The method according to claim 16, wherein the first indication information is carried in a control protocol packet header of the first packet.

18. The method according to claim 17, wherein the control protocol packet header comprises a neighbor notification protocol NNP packet header, and the first indication information is carried in a subtype field of the NNP packet header.

19. The method according to claim 17 or 18, wherein the first packet further comprises a link-layer packet header, the link-layer packet header comprises second indication information, and the second indication information indicates that the first packet comprises the control protocol packet header.

20. The method according to claim 19, wherein the second indication information is carried in a protocol field of the link-layer packet header.

21. The method according to any one of claims 12 to 20, wherein the method further comprises:
obtaining, by the first network device, second load information of the third network device, wherein the second load information of the third network device indicates a capability of the third network device to receive and forward a packet to a device outside the third device cluster; and
determining, by the first network device, load information of the second path based on the second load information of the third network device.

22. The method according to claim 21, wherein the second load information of the third network device is determined based on uplink traffic information of the third network device.

23. The method according to any one of claims 12 to 22, wherein the first network device is connected to the second network device through a first port, and the first network device is connected to the third network device through a second port; and
the determining, by the first network device, a target path from a first path and a second path based on load information of a second network device and load information of a third network device comprises:
determining, by the first network device, the load information of the first path based on load information of the first port, a hop count of the first path, and the load information of the second network device;
determining, by the first network device, the load information of the second path based on load information of the second port, a hop count of the second path, and the load information of the third network device; and
selecting, by the first network device, the target path from the first path and the second path based on the load information of the first path and the load information of the second path.

24. A load information sending method, wherein the method is applied to a first control plane device, and the method comprises:
obtaining, by the first control plane device, traffic information of a first forwarding plane device, wherein the first forwarding plane device belongs to a first forwarding plane device cluster;
determining, by the first control plane device, load information of the first forwarding plane device based on the traffic information of the first forwarding plane device; and
sending, by the first control plane device, the load information of the first forwarding plane device to a second forwarding plane device, wherein the second forwarding plane device belongs to a second forwarding plane device cluster, the load information of the first forwarding plane device is used by the second forwarding plane device to determine load information of a first path, and the first path comprises the second forwarding plane device and the first forwarding plane device.

25. A load information sending apparatus, wherein the apparatus is used in a first network device in a first device cluster, and the apparatus comprises:
a transceiver unit, configured to obtain traffic information of the first network device;
a processing unit, configured to determine load information of the first network device based on the traffic information of the first network device; and
a sending unit, configured to send the load information of the first network device to a second network device, wherein the second network device belongs to a second network device cluster, the load information of the first network device is used for determining load information of a path comprising a first subpath, and the first subpath is a path from the second network device to the first network device.

26. The apparatus according to claim 25, wherein the load information of the first network device comprises first load information and/or second load information, wherein the first load information is used for determining load information of a first path, the first path is a shortest path from the second network device to the first network device, and the first load information indicates a capability of the first network device to receive and forward a packet to a device in the first packet cluster; and the second load information is used for determining load information of a second path, the second path is a path from the second network device to a third network device through the first network device, the second load information indicates a capability of the first network device to receive and forward a packet to a network device in a third device cluster, and the third network device belongs to the third device cluster.

27. The apparatus according to claim 26, wherein the traffic information of the first network device comprises downlink traffic information of the first network device; and
the processing unit is configured to determine the first load information based on the downlink traffic information of the first network device.

28. The apparatus according to claim 26, wherein the traffic information of the first network device comprises uplink traffic information of the first network device; and
the processing unit is configured to determine the second load information based on the uplink traffic information of the first network device.

29. The apparatus according to any one of claims 25 to 28, wherein
the sending unit is specifically configured to send, by the first network device, a first packet to the second network device, wherein the load information of the first network device is carried in a payload part of the first packet.

30. The apparatus according to claim 29, wherein the first packet further comprises first indication information, and the first indication information indicates that the payload part of the first packet comprises the load information of the first network device.

31. The apparatus according to claim 30, wherein the first indication information is carried in a control protocol packet header of the first packet.

32. The apparatus according to claim 31, wherein the control protocol packet header comprises a neighbor notification protocol NNP packet header, and the first indication information is carried in a subtype field of the NNP packet header.

33. The apparatus according to claim 31 or 32, wherein the first packet further comprises a link-layer packet header, the link-layer packet header comprises second indication information, and the second indication information indicates that the first packet comprises the control protocol packet header.

34. The apparatus according to claim 33, wherein the second indication information is carried in a protocol field of the link-layer packet header.

35. The apparatus according to any one of claims 25 to 34, wherein
the transceiver unit is further configured to receive third load information sent by a fourth network device, wherein the third load information is determined based on traffic information of the fourth network device, and the fourth network device belongs to a fourth device cluster.

36. A packet sending apparatus, wherein the apparatus is used in a first network device in a first device cluster, and the apparatus comprises:
a transceiver unit, configured to obtain a target packet to be sent to a destination device, wherein the destination device belongs to a second device cluster; and
a processing unit, configured to determine a target path from a first path and a second path based on load information of a second network device and load information of a third network device, wherein the first path is a path from the first network device to the destination device through the second network device, the second path is a path from the first network device to the destination device through the third network device, the load information of the second network device is determined based on traffic information of the second network device, the load information of the third network device is determined based on traffic information of the third network device, the first network device belongs to the first device cluster, the second network device belongs to the second device cluster, and the third network device belongs to a third network device cluster, wherein
the transceiver unit is further configured to send the target packet to the destination device through the target path.

37. The apparatus according to claim 36, wherein the first path is a shortest path from the first network device to the destination device,
the transceiver unit is further configured to obtain first load information of the second network device, wherein the first load information of the second network device indicates a capability of the second network device to receive and forward a packet to a device in the second device cluster; and
the processing unit is specifically configured to determine load information of the first path based on the first load information of the second network device.

38. The apparatus according to claim 37, wherein the first load information of the second network device is determined based on downlink traffic information of the second network device.

39. The apparatus according to claim 37 or 38, wherein
the transceiver unit is specifically configured to receive a first packet sent by the second network device, wherein the first load information is carried in a payload part of the first packet.

40. The apparatus according to claim 39, wherein the first packet further comprises first indication information, and the first indication information indicates that the payload part of the first packet comprises the first load information.

41. The apparatus according to claim 40, wherein the first indication information is carried in a control protocol packet header of the first packet.

42. The apparatus according to claim 41, wherein the control protocol packet header comprises a neighbor notification protocol NNP packet header, and the first indication information is carried in a subtype field of the NNP packet header.

43. The apparatus according to claim 41 or 42, wherein the first packet further comprises a link-layer packet header, the link-layer packet header comprises second indication information, and the second indication information indicates that the first packet comprises the control protocol packet header.

44. The apparatus according to claim 43, wherein the second indication information is carried in a protocol field of the link-layer packet header.

45. The apparatus according to any one of claims 36 to 44, wherein
the transceiver unit is further configured to obtain second load information of the third network device, wherein the second load information of the third network device indicates a capability of the third network device to receive and forward a packet to a device outside the third device cluster; and
the processing unit is specifically configured to determine load information of the second path based on the second load information of the third network device.

46. The apparatus according to claim 45, wherein the second load information of the third network device is determined based on uplink traffic information of the third network device.

47. The apparatus according to any one of claims 36 to 46, wherein the first network device is connected to the second network device through a first port, and the first network device is connected to the third network device through a second port; and
the processing unit is specifically configured to: determine the load information of the first path based on load information of the first port, a hop count of the first path, and the load information of the second network device; determine the load information of the second path based on load information of the second port, a hop count of the second path, and the load information of the third network device; and select the target path from the first path and the second path based on the load information of the first path and the load information of the second path.

48. A load information sending apparatus, wherein the apparatus is used in a first control plane device, and the apparatus comprises:
a transceiver unit, configured to obtain traffic information of a first forwarding plane device, wherein the first forwarding plane device belongs to a first forwarding plane device cluster; and
a processing unit, configured to determine load information of the first forwarding plane device based on the traffic information of the first forwarding plane device, wherein
the transceiver unit is further configured to send the load information of the first forwarding plane device to a second forwarding plane device, wherein the second forwarding plane device belongs to a second forwarding plane device cluster, the load information of the first forwarding plane device is used by the second forwarding plane device to determine load information of a first path, and the first path comprises the second forwarding plane device and the first forwarding plane device.

49. A device, wherein the device comprises a memory and a processor, the memory is configured to store instructions, and the processor is configured to run the instructions, to enable the device to perform the method according to any one of claims 1 to 24.

50. A computer-readable storage medium, comprising instructions, wherein when the instructions are executed on a processor, the method according to any one of claims 1 to 24 is implemented.

51. A computer program product, comprising a program, wherein when the program is run on a processor, the method according to any one of claims 1 to 24 is performed.
